# EUROPÄISCHE PATENTSCHRIFT

(11) **EP 2 029 318 B1**
(45) Veröffentlichungstag und Bekanntmachung des Hinweises auf die Patenterteilung: **24.02.2010**
(21) Anmeldenummer: 07722518.3
(22) Anmeldetag: 08.06.2007
(51) Int. Cl.: B23P 15/10, B23B 1/00, B23B 5/00, F02F 3/22

(54) **VERFAHREN ZUR HERSTELLUNG EINES EINTEILIGEN KOLBENS**
METHOD FOR THE PRODUCTION OF A SINGLE PART PISTON
PROCÉDÉ DE FABRICATION D'UN PISTON D'UNE SEULE PIÈCE

(30) Priorität: 16.06.2006 DE 102006027810
(43) Veröffentlichungstag der Anmeldung: 04.03.2009
(73) Patentinhaber: Mahle International GmbH, 70376 Stuttgart (DE)
(72) Erfinder: SEIFRIED, Matthias, 78662 Herrenzimmern (DE)
(74) Vertreter: Pohle, Reinhard
(86) Internationale Anmeldenummer: PCT/DE2007/001011
(87) Internationale Veröffentlichungsnummer: WO 2007/143968

(56) Entgegenhaltungen:
- WO-A-02/076672
- AT-B- 354 325
- DE-A1- 10 132 446
- DE-A1- 10 152 316
- DE-C1- 10 013 395
- US-A- 3 464 100
- US-A1- 2004 231 631

## Beschreibung

Die vorliegende Erfindung betrifft ein Verfahren zur Herstellung eines einteiligen Kolbens für einen Verbrennungsmotor nach dem Oberbegriff des Patentanspruchs 1. Ein solches Verfahren ist aus der deutschen Patentschrift DE 100 13 395 C1 bekannt.

Ein derartiger aus Stahl im Gießverfahren hergestellter Kolben ist aus der Praxis bekannt. Um hierbei einen geschlossenen Kühlkanal zu erhalten, müssen auslösbare Gießkeme verwendet werden, die das Herstefiungsverfahren verkomplizieren und verteuern.

Ein einteiliger, aus einem geschmiedeten Kolbenrohling gearbeiteter Kolben ist aus der deutschen Patentschrift DE 100 13 395 C1 bekannt. Zur Herstellung des Kühlkanals sind dazu zwei unterschiedliche Arbeitsschritte erforderlich, die mit unterschiedlichen Drehwerkzeugen bei drehendem Kolben ausgeführt werden müssen. Im ersten Arbeitsschritt wird eine ringförmige Ausnehmung eingearbeitet, die dann um eine weitere axiale Ausnehmung ergänzt wird. Erst anschließend wird diese axiale Ausnehmung im zweiten Arbeitsschritt zum fertigen Kühlkanal zu Ende bearbeitet. Dabei ist es von Nachteil, dass zum Einführung der Drehwerkzeuge der Kolben in seiner Drehbewegung in einer vorbestimmten Stellung angehalten werden muss, nämlich in derjenigen Stellung, in der das Drehwerkzeug zwischen den Kolbenschäften eingeführt werden kann. Erst nach dem Einführen des Drehwerkzeugs wird der Kolben wieder in Drehung versetzt und der Kühlkanal ausgearbeitet.

Die Drehwerkzeuge bewegen sich dabei ausschließlich in radialer und axialer Richtung zur Kolbenachse. Das hat zur Folge, dass die Höhe des so hergestellten Kühlkanals von der Höhe der Ausnehmung zwischen dem Kolbenkopf und dem kastenförmigen Kolbenschaft abhängig ist. Die Höhe des Kühlkanals ist immer geringer als die doppelte Höhe der Ausnehmung zwischen Kolbenkopf und Kolbenschaft, weil nicht nur die Höhe dieser Ausnehmung, sondern auch die Dicke der verwendeten Werkzeuge die erreichbare Höhe des Kühlkanals begrenzt.

Der vorliegenden Erfindung liegt die Aufgabe zugrunde, ein Verfahren zur Herstellung eines einteiligen Kolbens bereitzustellen, bei dem die Höhe des Kühlkanals unabhängig von der Höhe der Ausnehmung zwischen dem Kolbenkopf und dem Kolbenschaft gestaltet werden kann und weiches ausgeführt werden kann, ohne die Drehbewegung des Kolbens zu unterbrechen.

Die Lösung besteht in einem Verfahren mit den Merkmalen des Patentanspruchs 1. Dabei ist erfindungsgemäß vorgesehen, dass zur spanabhebenden Bearbeitung des Kühlkanals ein Werkzeug bei drehendem Kolben in einer bogenförmigen Schwenkbewegung durch die Ausnehmung in den Bereich des Kühlkanals hineinbewegt und der Kühlkanal ausgearbeitet wird.

Das erfindungsgemäße Verfahren erlaubt es erstmals, die Höhe des Kühlkanals unabhängig von der Höhe der Ausnehmung zwischen Kolbenkopf und Kolbenschaft zu gestalten. Die erfindungsgemäße bogenförmige Schwenkbewegung des Werkzeugs, die nicht parallel zu den Kolbennabenflächen ausgeführt wird, bewirkt, dass die Abmessungen des verwendeten Werkzeugs nicht von der Höhe der Ausnehmung zwischen Kolbenkopf und Kolbenschaft begrenzt werden. Die Höhe des Kühlkanals kann somit jederzeit den Anforderungen an den jeweils herzustellenden Kolben angepasst werden. Damit kann das erfindungsgemäße Verfahren bei den unterschiedlichsten Kolbentypen zur Anwendung kommen.

Die vorliegende Erfindung zeichnet sich ferner dadurch aus, dass der Kühlkanal in einem einzigen Arbeitsschritt mit einem einzigen Werkzeug ausgehend von der ringförmigen Ausnehmung zwischen Kolbenkopf und Kolbenschaft hergestellt werden kann. Dies erspart Arbeitszeit und Werkzeugkosten, wodurch die Herstellungskosten insgesamt gesenkt werden können.

Vorteilhafte Weiterbildungen ergeben sich aus den Unteransprüchen.

Bei einer bevorzugten Ausführungsform erfolgt die bogenförmige Schwenkbewegung des Werkzeugs durch die Ausnehmung in den Bereich des Kühlkanals bei sich drehendem Kolbenrohling. Der Kolbenrohling kann also in einer ständigen Drehbewegung gehalten werden, was den Ablauf des erfindungsgemäßen Verfahrens weiter vereinfacht und Zeit sowie Energie einspart.

Eine weitere vorteilhafte Ausgestaltung besteht darin, dass die spanabhebende Bearbeitung des Kühlkanals bereits während der bogenförmigen Schwenkbewegung des Werkzeugs erfolgt. Dies ermöglicht einen kontinuierlichen Herstellungsprozess mit der entsprechenden Zeit- und Kostenersparnis, sondern macht das erfindungsgemäße Verfahren auch unabhängig von der Höhe der Ausnehmung zwischen Kolbenkopf und Kolbenschaft.

Ein für das erfindungsgemäße Verfahren geeignetes Werkzeug ist bspw. ein Drehmeißel, insbesondere ein hakenförmiger Drehmeißel.

Ein Ausführungsbeispiel der vorliegenden Erfindung wird im Folgenden anhand der beigefügten Zeichnungen näher erläutert. Es zeigen in einer schematischen, nicht maßstabsgetreuen Darstellung:
- Figur 1: einen Kolbenrohling mit strichpunktiert angedeutetem erfindungsgemä- ßem Kolben in Seitenansicht im Schnitt;
- Figuren 2 bis 6: eine Darstellung der bogenförmigen Schwenkbewegung eines Drehmeißels durch die Ausnehmung in den Bereich des Kühlkanals ge- mäß der Erfindung.

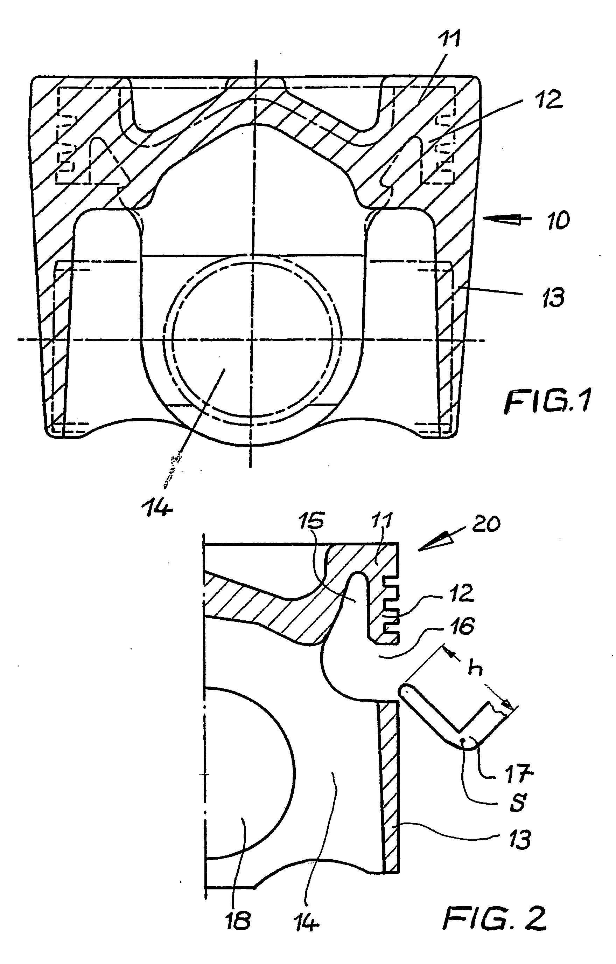

In Figur 1 ist ein einteiliger geschmiedeter Kolbenrohling 10 dargestellt, der im Ausführungsbeispiel nach einem an sich bekannten Gesenkschmiedeverfahren hergestellt ist. Mit strichpunktierten Linien ist die Kontur des fertigen Kolbens 20 angedeutet. Der Kolbenrohling 10 umfasst einen Kolbenkopf 11 mit dem späteren Kolbenringband 12, einen Kolbenschaft 13 und an den Kolbenkopf 11 angehängte Kolbennaben 14 und kann bspw. aus einem schmiedbaren Stahl oder einer Leichtmetall-Legierung wie zum Beispiel einer Aluminium-Legierung hergestellt werden.

In den Figuren 2 bis 6 sind die Verfahrensschritte zur erfindungsgemäßen Herstellung eines Kühlkanals 15 im Bereich des Kolbenringbandes 12 dargestellt.

In einem ersten Verfahrensschritt wird bei dem Kolbenrohling 10 eine ringförmige Ausnehmung 16 durch spanabhebende Bearbeitung, im Ausführungsbeispiel durch Drehen, angebracht. Die Höhe der Ausnehmung 16 muss nur so groß sein, dass ein Werkzeug, im Ausführungsbeispiel ein hakenförmiger Drehmeißel 17, bei sich drehendem Kolben in einer bogenförmigen Schwenkbewegung in den Bereich des herzustellenden Kühlkanals 15 hineinbewegbar ist. Durch diese Ausnehmung 16 ist der Kolbenkopf 11 nur noch über die Kolbennaben 14 mit dem Kolbenschaft 13 verbunden.

Zur Herstellung des ringförmig umlaufenden Kühlkanals 15 im Bereich des Kolbenringbandes 12 wird nun der hakenförmige Drehmeißel 17 bei sich drehendem Kolben in einer bogenförmigen Schwenkbewegung A in den Bereich des herzustellenden Kühlkanals 15 hineinbewegt. Aufgrund dieser bogenförmigen Schwenkbewegung kann die Höhe der Ausnehmung 16 wesentlich kleiner sein als die Höhe h des hakenförmigen Drehmeißels 17. Das hat zur Folge, dass die Höhe h des Drehmeißels 17 höher gewählt werden kann als die Höhe der Ausnehmung 16, so dass in axialer Richtung ein Kühlkanal 15 herausgearbeitet werden kann, dessen Tiefe nicht nur wesentlich größer sein kann als die Höhe der Ausnehmung 16, sondern dessen Tiefe völlig unabhängig von der Höhe der Ausnehmung 16 gewählt werden kann. Bei optimierter Ausbildung und Wegführung des Drehmeißels 17 kann eine völlig beliebige und nahezu unbegrenzte Tiefe des Kühlkanals 15 erreicht werden. Damit können mit dem erfindungsgemäßen Verfahren verschiedenste Typen von einteiligen Kolben hergestellt werden, die optimal an die Anforderungen des jeweiligen Motortyps angepasst werden können.

Hervorzuheben ist ferner, dass der Kühlkanal 15 in einem einzigen Arbeitsschritt mit einem einzigen Werkzeug 17 wie bspw. dem oben erwähnten hakenförmigen Drehmeißel, bei sich drehendem Kolben hergestellt wird.

In den Figuren 2 bis 6 ist die bogenförmige Schwenkbewegung des Werkzeugs, im Ausführungsbeispiel des hakenförmigen Drehmeißels 17, in einzelnen Schritten veranschaulicht. Dabei wurde aus Gründen der Anschaulichkeit die Darstellung des Kolbenrohlings 10 durch die Darstellung des fertigen Kolbens 20 ersetzt.

Die Figur 2 zeigt das Ansetzen des Drehmeißels 17 an den Kolbenrohling in einer gekippten Winkellage.

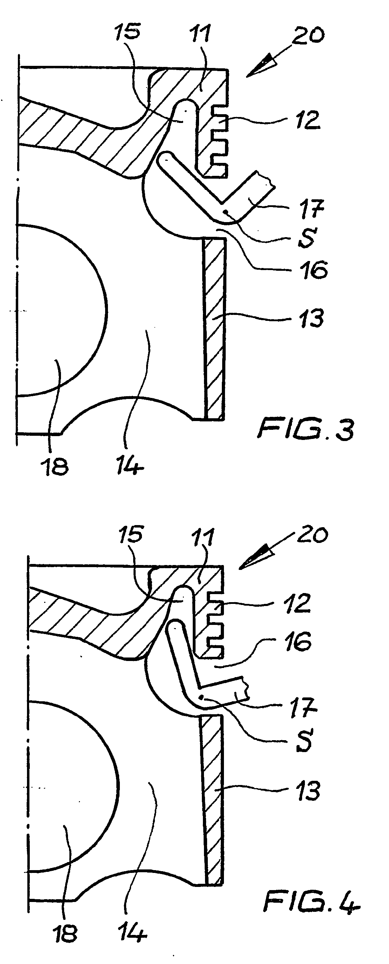

Die Figur 3 zeigt das Eindringen des Drehmeißels 17 durch die Ausnehmung 16 in den Bereich des Kühlkanals 15, wobei der Drehmeißel 17 nicht nur eine radiale und eine axiale Bewegung, sondern auch eine Schwenkbewegung um den Schwenkpunkt S ausführt.

Die Figur 4 zeigt den Drehmeißel 17 während der bogenförmigen Schwenkbewegung um den Schwenkpunkt S, bei der die Form des Kühlkanals 15 herausgearbeitet wird.

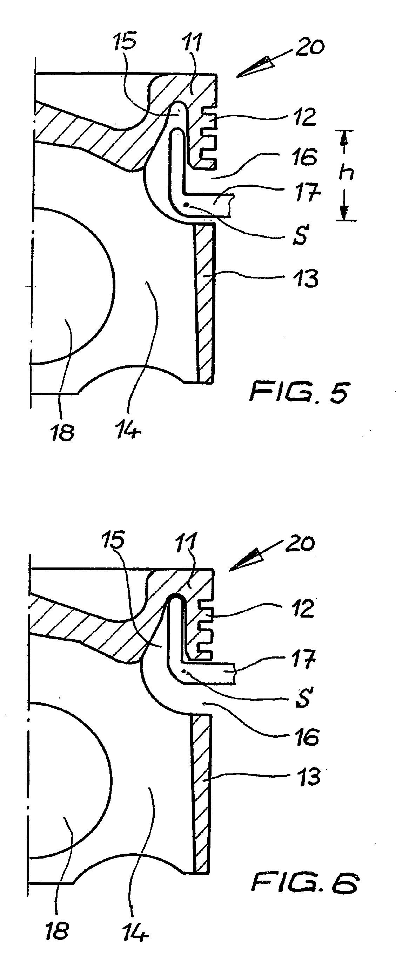

Die Figur 5 zeigt den Drehmeißel 17 am Ende seiner Schwenkbewegung um den Schwenkpunkt S beim Übergang in eine weitere axiale Bewegung. In dieser Darstellung ist deutlich zu sehen, dass der Drehmeißel 17 eine wesentlich größere Höhe h aufweist als die Ausnehmung 16.

Die Figur 6 zeigt schließlich, wie der Drehmeißel 17 seine Endposition erreicht und der Kühlkanal 15 seine endgültige Form und Tiefe erhalten hat.

Aus dem beschriebenen Herstellungsvorgang wird deutlich, dass mit dem auf einem Werkzeugkopf sitzenden Drehmeißel 17 infolge seiner bogenförmigen Schwenkbewegung um einen Schwenkpunkt S ein Kühlkanal 15 mit beliebiger Tiefe- hergestellt werden kann. '

Nach der Fertigstellung des Kühlkanals 15 werden Nabenbohrungen 18 in bekannter Weise eingebracht, und die Außenkontur des Kolbens 20 wird spanabhebend fertigbearbeitet.

Zum Verschließen des nach unten offenen Kühlkanals 16 wird in bekannter Weise ein zweigeteilter Abdeckring (z.B. eine geteilte Tellerfeder) vorgespannt in entsprechende Auflage am Kolbenkopf 11 eingebracht. Der Abdeckring ist mit einer Zuführ- und einer Abführöffnung für das Kühlöl versehen (nicht dargestellt).

Mit dem erfindungsgemäßen Verfahren wird auf besonders einfache und kostengünstige Weise ein einteiliger Kolben mit einem großvolumigen Kühlkanal hergestellt, der aufgrund seiner freien Werkstoffwahl - geschmiedeter Stahl oder schmiedbare Leichtmetall-Legierung - gegenüber im Gießverfahren hergestellte Kolben z.B. höhere Festigkeiten aufweist, so dass er insbesondere für hoch belastete Dieselmotoren sehr gut geeignet ist.

## Patentansprüche

1. Verfahren zur Herstellung eines einteiligen Kolbens (20) für einen Verbrennungsmotor aus einem Kolbenrohling (10), mit einem in einem Kolbenkopf (11) ringförmig umlaufenden nach unten offenen Kühlkanal (15) und einer zwischen dem Kolbenkopf (11) und einem Kolbenschaft (13) ausgebildeten ringförmigen Ausnehmung (16), wobei der Kolbenkopf (11) und der Kolbenschaft (13) mittels Kolbennaben (14) miteinander verbunden sind, und wobei die ringförmige Ausnehmung (16) und der Kühlkanal (15) durch spanabhebende Bearbeitung in den Kolbenrohling (10) eingearbeitet werden, anschließend die Außenkontur fertig bearbeitet und der Kühlkanal verschlossen wird, **dadurch gekennzeichnet, dass** zur spanabhebenden Bearbeitung des Kühlkanals (15) ein Werkzeug (17) bei drehendem Kolben in einer bogenförmigen Schwenkbewegung (A) durch die Ausnehmung (16) in den Bereich des Kühlkanals (15) hineinbewegt und der Kühlkanal (15) ausgearbeitet wird.

2. Verfahren nach Anspruch 1, **dadurch gekennzeichnet, dass** die bogenförmige Schwenkbewegung (A) des Werkzeugs (17) durch die Ausnehmung (16) in den Bereich des Kühlkanals (15) bei sich drehendem Kolbenrohling (10) erfolgt.

3. Verfahren nach einem der vorherigen Ansprüche, **dadurch gekennzeichnet, dass** die spanabhebende Bearbeitung des Kühlkanals (15) während der bogenförmigen Schwenkbewegung (A) des Werkzeugs (17) erfolgt.

4. Verfahren nach einem der vorhergehenden Ansprüche, **dadurch gekennzeichnet, dass** als Werkzeug (17) ein Drehmeißel, insbesondere ein hakenförmiger Drehmeißel verwendet wird.

## Claims

1. Procedure for the manufacture of a single-component piston (20) for a combustion engine comprising a blank piston (10), with a ring-shaped circular cooling duct (15) open to the bottom in a piston head (11) and a piston shaft (13) and a recess (16), ring-shaped in design, between the piston head (11) and the piston shaft (13) whereby the piston head (11) and the piston shaft (13) are connected to one another by means of piston hubs (14) and whereby the ring-shaped recess (16) and the cooling duct (15) are incorporated into the blank piston (10) by means of machine processing, subsequently the outer contour is processed and the cooling duct is closed, thereby **characterised by** the fact that for the machine processing of the cooling duct (15), with the piston revolving, a tool (17) is moved in an arc-shaped swivel movement (A) through the recess (16) into the area of the cooling duct (15) and the cooling duct (15) is prepared.

2. Procedure according to Claim 1, **characterised by** the fact that the arc-shaped swivel movement (A) of the tool (17) through the recess (16) into the area of the cooling duct (15) takes place whilst the blank piston (10) is revolving.

3. Procedure according to one of the above-mentioned claims, **characterised by** the fact that the machine processing of the cooling duct (15) takes place during the arc-shaped swivel movement (A) of the tool (17).

4. Procedure according to one of the above-mentioned claims, **characterised by** the fact that a lathe tool, in particular a hook-shaped lathe tool, is used as tool (17)

## Revendications

1. Procédé de fabrication d'un piston d'une seule pièce (20) pour un moteur à combustion interne à partir d'une ébauche de piston (10), comprenant un canal de refroidissement (15) ouvert vers le bas disposé en anneau autour d'une tête de piston (11) et un évidement (16) conçu en anneau entre la tête de piston (11) et une tige de piston (13), la tête de piston (11) et la tige de piston (13) étant reliées l'une à l'autre au moyen de bossages de piston (14), et l'évidement (16) en anneau et le canal de refroidissement (15) étant incorporés dans l'ébauche de piston (10) par un usinage à enlèvement de copeaux, le contour externe étant ensuite fini et le canal de refroidissement obturé, **caractérisé en ce que**, pour l'usinage à enlèvement de copeaux du canal de refroidissement (15), un outil (17), lors de la rotation du piston, se déplace selon un mouvement pivotant en forme d'arc (A) dans la zone du canal de refroidissement (15) par l'intermédiaire de l'évidement (16) et le canal de refroidissement (15) est élaboré.

2. Procédé selon la revendication 1, **caractérisé en ce que** le mouvement pivotant en forme d'arc (A) de l'outil (17) s'effectue par l'intermédiaire de l'évidement (16) dans la zone du canal de refroidissement (15) lors de la rotation de l'ébauche de piston (10).

3. Procédé selon l'une quelconque des revendications précédentes, **caractérisé en ce que** l'usinage à enlèvement de copeaux du canal de refroidissement (15) s'effectue pendant le mouvement pivotant en forme d'arc (A) de l'outil (17).

4. Procédé selon l'une quelconque des revendications précédentes, **caractérisé en ce qu'**est utilisé en tant qu'outil (17) un outil de tournage, en particulier un outil de tournage en forme de crochet.
